# EUROPÄISCHE PATENTSCHRIFT

(11) **EP 1 073 286 B1**
(45) Veröffentlichungstag und Bekanntmachung des Hinweises auf die Patenterteilung: **03.01.2007**
(21) Anmeldenummer: 00115994.6
(22) Anmeldetag: 26.07.2000
(51) Int. Cl.: H04Q 3/00, H04M 3/42

(54) **Verfahren zur Nutzung eines gemeinsamen Dienstes aus unterschiedlichen Telekommunikationsnetzen**
Methode for the use of common services in different telecommunication networks
Méthode pour l'utilisation de services communs dans des réseaux de télécommunications différents

(30) Priorität: 27.07.1999 DE 19934467
(43) Veröffentlichungstag der Anmeldung: 31.01.2001
(73) Patentinhaber: T-Mobile Deutschland GmbH, 53227 Bonn (DE)
(72) Erfinder: Ostermann, Clemens, 53639 Königswinter (DE)
(74) Vertreter: Riebling, Peter

(56) Entgegenhaltungen:
- WO-A-00/45610
- US-A- 5 625 681
- US-A- 5 661 792
- US-A- 5 764 745

## Beschreibung

Die Erfindung betrifft ein Verfahren zur Nutzung eines gemeinsamen Dienstes aus unterschiedlichen Telekommunikationsnetzen.

Innerhalb der Telekommunikation kommt es immer wieder vor, daß eine gemeinsame Nutzung von Diensten über die eigene Netzgrenze erfolgt. Die Gespräche werden in das Zielnetz geroutet und der Dienst läuft dort komplett ab.
Im Zuge von Verbundprodukten ist es möglich, die Gespräche im eigenen Netz zu belassen, trotzdem aber einen gemeinsamen Dienst zu nutzen.

Ein Problem stellt hierbei die gemeinsame Nutzung von Kundendaten dar. Um sicher zu sein, daß es zu keinen Datenbank Abweichungen kommt, werden Dienst und Daten in einem Netz zur gemeinsamen Nutzung bereitgestellt. Was für Kundendaten sinnvoll ist, führt bei netzspezifischen Daten zu großen Abhängigkeiten zwischen den Netzbetreibern. Ein sinnvolles, autarkes Netzmanagement ist nicht mehr möglich, da der Dienst aus allen Netzen gleich angesteuert werden muß.

Netz- und Produktplanung müssen somit zwischen den Netzbetreibern abgestimmt werden. Das wird um so schwieriger je mehr Dienste ein Netzbetreiber in seinem bzw. fremden Netzen realisiert hat. Ist eine Abstimmung überhaupt möglich, so sind hier große Planungsaufwände mit langwierigen Umsetzungen zur Koordinierung der Netze erforderlich. Soll ein Dienst mehr als zwei Netze integrieren, ist eine Abstimmung kaum noch möglich.

Die Problematik betrifft hauptsächlich drei Bereiche. Erstens die Anwahl aus den Netzen. Es muß eine gemeinsame Rufnummer in allen Netzen gefunden und der Dienst entsprechend angesteuert werden.
Zweitens die Ansagen müssen im Ursprungsnetz angelegt werden. Werden die Ansagen nur in einem Netz erzeugt, müssen hierfür Interconnection Gebühren gezahlt werden, obwohl Netzansagen im allgemeine gebührenfrei sind.
Drittens besteht eine extreme Abhängigkeit in der Gebührenerhebung (Billing). Im allgemeinen werden für die Nutzung spezieller Dienste nicht die normalen Telefongebühren erhoben, sondern es gelten spezielle Tarife. Bei komplexer Gestaltung eines Dienst werden vom Dienst selber Billing Tickets erzeugt (z.B. 0800, 0180, 0190, IN-VPN, Auskunft,...). Es gibt aber weltweit nicht zwei Netzbetreiber mit gleicher Software auf den Rating- und Billing Maschinen. Die Vergebührung der Gespräche liegt in der jeweiligen Netzhoheit des Betreibers. Hier gemeinsame Billing Szenarien festzulegen erhöht in großem Maße die Zeit, bis ein gemeinsamer Dienst eingeführt werden kann.

Die nachveröffentlichte Publikation WO 00/45610 A2 (Stand der Technik gemäß Art. 54(3) EPÜ) beschreibt allgemein die Einrichtung und Funktionsweise eines Dienstes in einem Intelligenten Netzwerk und den Aufruf aus einem Kommunikationsnetz, löst aber nicht die Probleme einer gemeinsamen, aber voneinander unabhängigen Nutzung des Dienstes durch verschiedene Kommunikationsnetze.

Die Patentschriften US 5764745 A, US 5625681 A und US 5661792 A befassen sich mit der Thematik der Rufnummernportabilität, das heißt der Möglichkeit der Beibehaltung der eigenen Rufnummer bei einem Wechsel des Providers oder des Wohnortes. Verfahren für eine gemeinsame Dienstenutzung durch verschiedene Kommunikationsnetze sind nicht offenbart.

Die Aufgabe der Erfindung besteht darin, ein Verfahren anzugeben, mit dem die genannten Problembereiche der gemeinsamen Dienstenutzung aus unterschiedlichen Telekommunikationsnetzen weitestgehend vermieden werden.

Diese Aufgabe wird erfindungsgemäß durch die Merkmale der unabhängigen Patentansprüche gelöst.

Bevorzugte Ausgestaltungen der Erfindung sind in den abhängigen Ansprüchen angegeben.

Vorteil des erfindungsgemäßen Verfahrens ist, daß es die Ansteuerung eines gemeinsamen Dienstes unter ein- und derselben, als auch mit verschiedenen Zugangsrufnummern aus mehreren Netzen ermöglicht, wobei die Netze individuell auf den selben Dienst zugreifen können. Die einzelnen Netzbetreiber bleiben dabei in Ihrer Planung autark. Alle Ansagen werden im eigenen Netz erzeugt und das Billing kann individuell gestaltet werden.

Das Verfahren unterstützt beliebige öffentliche Telekommunikationsnetze. Die Steuerung erfolgt über ISDN (ISUP) mit INAP bzw. CAMEL Signalisierung. Die Signalisierung sollte mittels digitaler Übertragungstechnik erfolgen, wobei es sich beim Ursprung und Ziel um Festnetz oder Funknetz, national oder international, mit Telephonie oder Daten Calls handeln kann.

Die Dienstlogik des Verfahrens basiert auf einem zentralen Dienstknoten und einer Dienstdatenbank die mit den Vermittlungen des öffentlichen Netzes kommuniziert und diese steuert. Eine typische Umsetzung einer solchen Basis bildet die IN (Intelligent Network) Technologie gemäß CCITT Q12XX Serie (siehe auch ETSI CORE INAP Protokoll gemäß ETS 300 374) und dem CAMEL Standard.

Die hier beschriebene Methode löst die geschilderten Probleme indem der Dienst auf einer einzigen gemeinsamen Plattform installiert wird. Die Kunden aller Netzbetreiber, die den Dienst subskribiert haben, werden auf der gemeinsamen Plattform zentral eingerichtet. Die globalen, netzspezifischen Daten der einzelnen Netzbetreiber können pro Betreiber individuell eingestellt werden.
Beim Aufbau eines Rufes zum gemeinsamen Dienst wird dieser vom Ursprungsnetz erkannt. Dies kann entweder anhand von fest für den Ursprung im öffentlichen Netz eingetragenen Daten, (Zwangs-) Trigger im Netz (d.h. jedes Gespräch wird automatisch zum Dienst geführt) oder anhand einer gewählten Dienstkennung mit entsprechenden Einträgen in den Routingtabellen geschehen. Die Wahlinformation wird aus dem eigenen Netz zu einem zentralen Dienstknoten eines intelligenten Netzes (IN) übertragen und analysiert. Über die Logik dieses Dienstknotens wird das Ursprungsnetz erkannt und pro Anbieter individuelle Anwahlen unterstützt. Je nach Dienstlogik werden die benötigten Routing Informationen an das Ursprungsnetz zurückgegeben. So wird ein unnötiges Routing zwischen den Netzen unterbunden. Gleichzeitig kann zur Rufaufbauzeit ein individuelles IN Ticket zusätzlich zum üblichen Netz Ticket erzeugt werden. Der große Vorteil dieser Methode besteht darin, das sich beide Tickets im Hoheitsgebiet eines Netzanbieters befinden. So kann das 'normale' Netz Ticket schon während des Rufaufbaus unterdrückt und das IN Ticket zur Abrechnung kommen. Werden die Tickets in zwei Netzen erzeugt, müßten die Tickets über die Netzgrenze zum Ursprungsnetz weitergegeben und interpoliert werden, da der Kunde sonst für sein Gespräch zweimal abgerechnet würde. Die Interpolation von Tickets ist z.Z. mit den meisten am Markt befindlichen Abrechnungssystemen nicht möglich. Zusätzlich würde für jeden Dienst ein eigener Interconnection Vertrag benötigen werden.

Nachfolgend wird die Erfindung anhand mehrerer Ausführungsbeispiele unter Bezugnahme auf die Zeichnungsfiguren näher erläutert. Dabei ergeben sich aus den Zeichnungen und ihrer Beschreibung weitere Merkmale und Vorteile der Erfindung.

Es zeigen:
- Figur 1:: Grundsätzliche Architektur eines Netzdienstes mittels IN;
- Figur 2:: Erfindungsgemässe Architektur zum Zusammenschalten mehrerer Netze;
- Figur 3:: Rufaufbau aus unterschiedlichen Netzen zu einem Ziel;
- Abb. 4:: Netzunabhängige Unterstützung von Netzansagen;
- Abb. 5:: Individuelle Abrechnungsmöglichkeiten in jedem Netz.

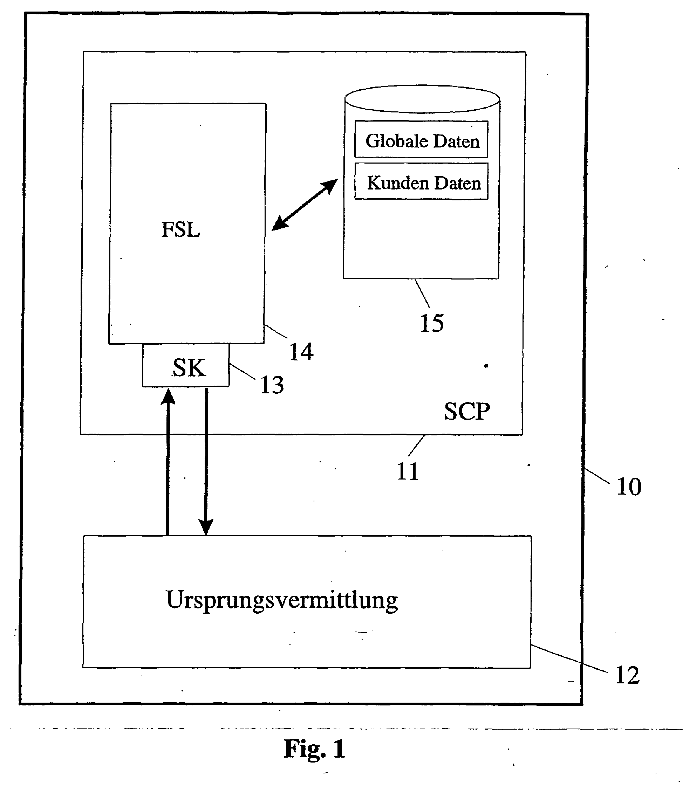

Figur 1 zeigt die grundsätzliche Architektur eines Netzdienstes mittels IN. Der Dienst befindet sich in einem Dienstesteuerungspunkt 11 (Service Control Point: SCP) eines Telekommunikationsnetzes 10 und wird von der Vermittlungsstelle 12 über einen Diensteschlüssel 13 (Service Key: SK) aufgerufen. Unter dem Diensteschlüssel 13 liegt die Flexible Dienste Logik 14 (FSL), die den eigentlichen Dienst darstellt. Die FSL 14 besitzt eine Datenbank 15, wo jeweils die spezifischen Netzparameter und die Kundendaten hinterlegt sind. Diese Lösung ist genau für ein Netz zugeschnitten. Greifen mehrere Netze auf den Service Key 13 zu, müssen sich alle an die selben Globalen Parameter halten.

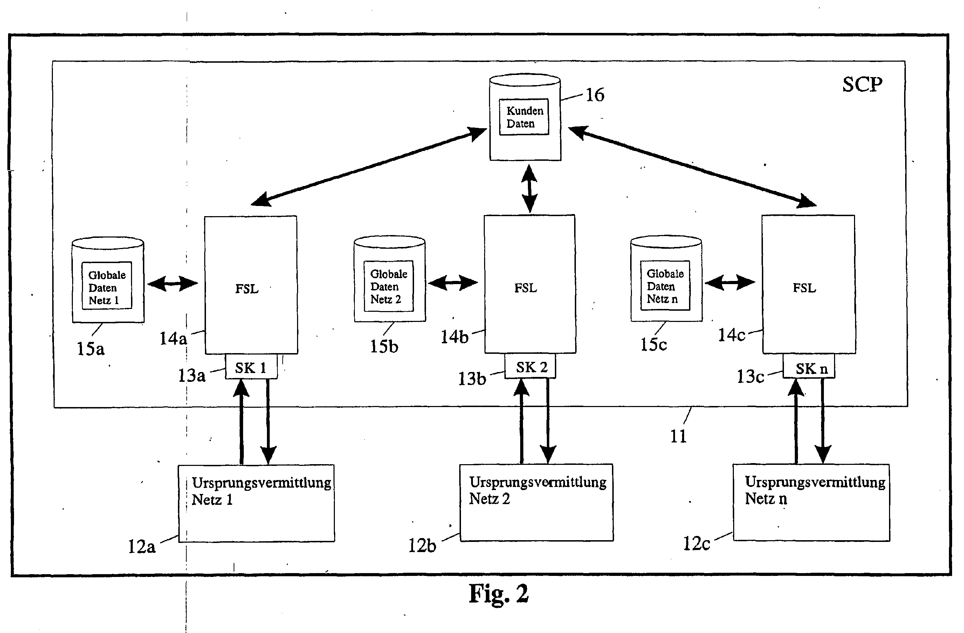

Figur 2 zeigt die erfindungsgemässe Zusammenschaltung mehrerer Telekommunikationsnetze. Der Dienst 14 (FSL) braucht nur einmal entwickelt zu werden. Der selbe Dienst 14a-14c wird aber unter verschiedenen Diensteschlüssel (Service Keys) 13a-13c mehrfach parallel in den Dienstesteuerungspunkt 11 (SCP) eingebracht.

Alle Netze können eigenständig Service Keys 13a-13c in den Vermittlungsstellen 12a-12c festlegen und kollidieren nicht mit eigenen bereits vorhandenen Diensten und deren Service Keys. Eine Abstimmung zwischen allen teilnehmenden Netzen ist nicht erforderlich. Einzige Voraussetzung: die Service Keys 13a-13c dürfen im gemeinsamen Dienstesteuerungspunkt 11 nicht doppelt vergeben werden. Kommt ein Gespräch zur zuständigen Dienstlogik 14a-14c liegen hier alle Informationen für die Normierung der Gesprächsinformationen vor. Sollte die Dienst Logik 14a-14c Prüfungen vornehmen, können diese mit netzspezifischen Daten 15a-15c durchgeführt werden. Es können nach diesem Schema auch ausländischen Netzbetreibern angeschlossen werden.
Alle Dienstlogiken 14a-14c greifen auf eine gemeinsame Kundendatenbank 16 zu. Die Routinginformation wird aber immer in das Ursprungsnetz zurückgeben. Die Gebühren-Tickets entstehen somit auch in den Netzen die den Verkehr erzeugen und können hier abgerechnet werden.
Das Intelligente Netz kann in IN eigenen Ticket sog. Transparent Data schreiben. Der Inhalt ist durch die Dienstlogik 14 bestimmbar. Obwohl nur eine FSL 14 genutzt wird kann mittels der individuellen globalen Daten 15a-15c pro Netz eine andere Information zurückgegeben werden. Die Abrechnungsszenarien und Produktgestaltungen sind unabhängig voneinander.
Läuft die Dienstlogik 14a-14c in ein verbotenes oder nicht unterstütztes Rufszenario, so wird meist eine Ansage angelegt. Durch die netzspezifische Trennung kann pro Netz eine individuelle Ansagenkennung mitgegeben werden und je Netzbetreiber eigene Ansagen ins Netz eingebracht werden.

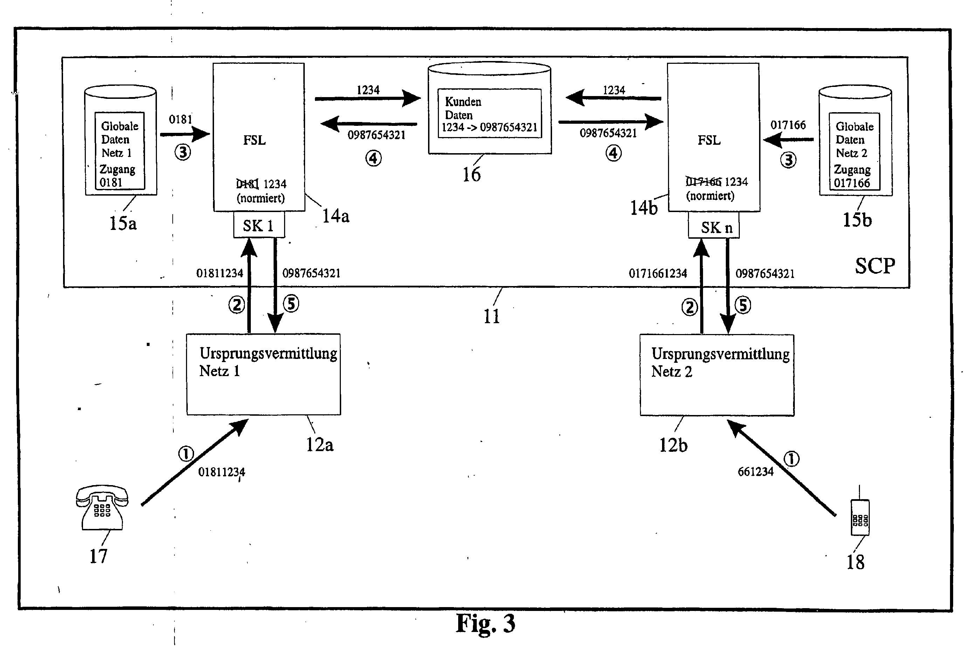

Figur 3 zeigt ein Beispiel für einen Rufaufbau aus unterschiedlichen Netzen zu einem Ziel. Der grundsätzliche Rufaufbau ist in allen beteiligten Netzen identisch. Das folgende Übersichtbild zeigt die prinzipielle Anwahl.

Schritt 1: Der Teilnehmer wählt an seinem Endgerät 17 bzw. 18 die ihm bekannte netzindividuelle Zugangsnummer 01811234 bzw. 661234 für den gewünschten Dienst.
Schritt 2: Die Vermittlungsstelle 12a bzw. 12b des jeweiligen Teilnehmers erkennt anhand der gewählten Nummer den gemeinsamen Dienst und leitet das Gespräch zum gemeinsamen Dienstesteuerungspunkt 11 bzw. die Vermittlungsstelle 12a bzw. 12b gibt jedes Gespräch des Anschlusses 17 bzw. 18 automatisch zum SCP 11 (Zwangs- Trigger).
Schritt 3: Die Dienstlogik 14a bzw. 14b normiert die Zugangsziffern für die Netze individuell anhand der globalen Daten 15a bzw. 15b.
Schritt 4: Es erfolgt ein normierter Zugriff auf die gemeinsame Datenbank 16 mit der normierten Zugangsnummer 1234.

Schritt 5: Die entsprechende Zielrufnummer 0987654321 wird an die Vermittlungsstellen 12a bzw. 12b beider Netze zurückgegeben, die das Gespräch zum selben Ziel weiterleiten.

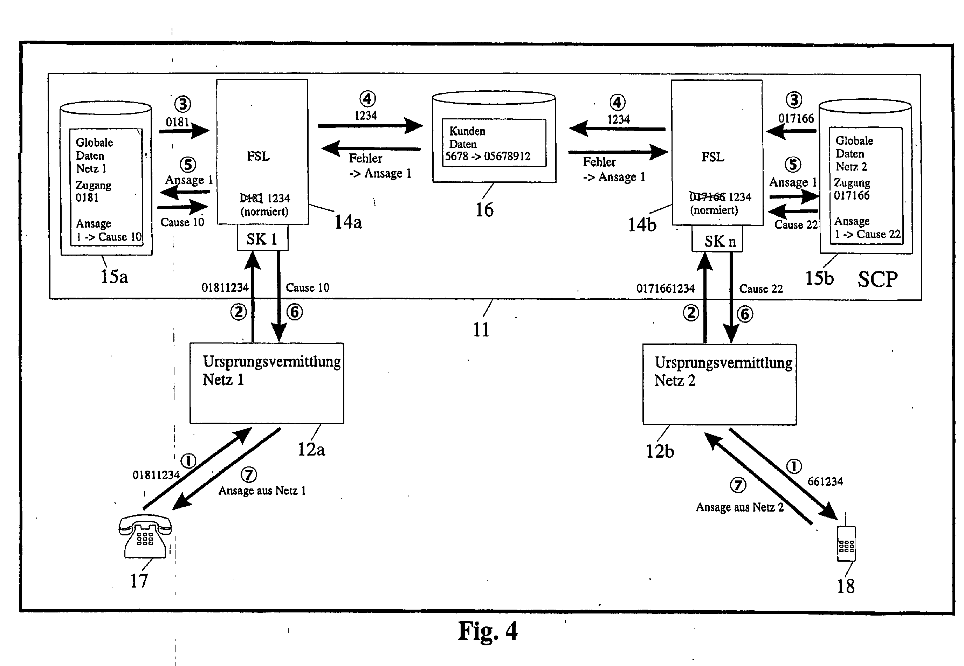

In Figur 4 ist die unabhängige Unterstützung von Netzansagen dargestellt. Der grundsätzliche Rufaufbau ist in allen beteiligten Netzen identisch.

Schritt 1-3: identisch zu den Schritten 1-3 wie im Beispiel nach Figur 3.
Schritt 4: Die gewählte, normierte Nummer 1234 wird in der gemeinsamen Datenbank 16 überprüft, ist jedoch im Dienst unbekannt. Es wird eine Ansagekennung vom Dienst generiert. Schritt 5: Die Ansagekennung wird anhand der netzindividuellen globalen Daten 15a bzw. 15b in eine individuelle Netzansage (Cause) übersetzt.
Schritt 6: Der Cause führt in der zuständigen Vermittlungsstelle 12a bzw. 12b auf eine vom Netzbetreiber selbst festgelegte Ansage.
Schritt 7: Der Teilnehmer 17 bzw. 18 hört die Ansage, wobei jeder Netzanbieter für den selben Dienst unterschiedliche Inhalte für den gemeinsamen Fehlerfall festlegen kann.

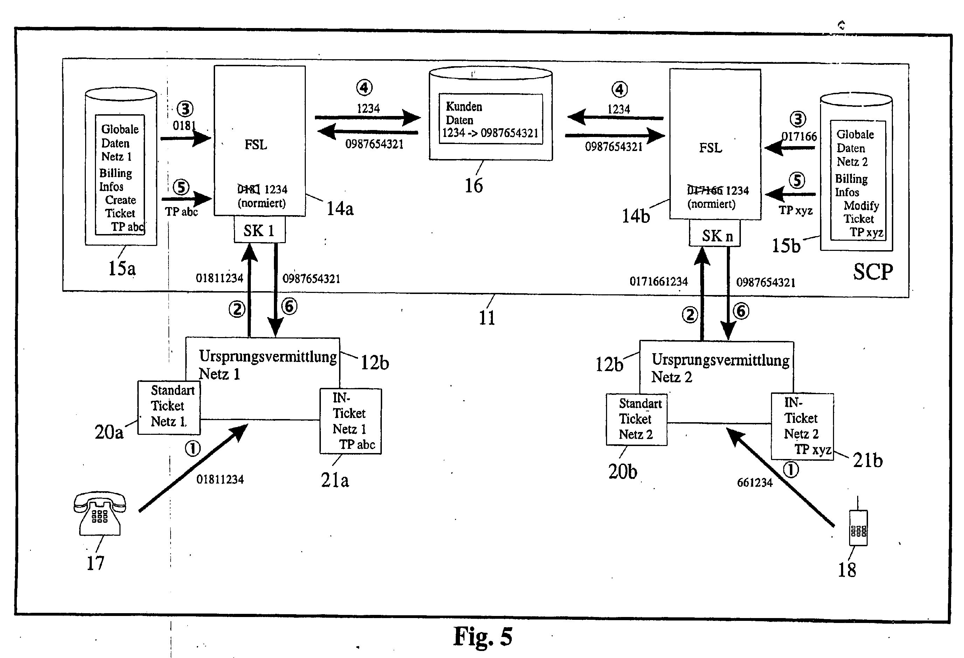

Figur 5 erläutert ein Beispiel für die individuelle Erzeugung von Billing Tickets. Der Rufaufbau ist identisch zum Beispiel nach Figur 3.

Schritt 1: Hier wird im Netz automatisch ein Standard Billing Ticket 20a bzw. 20b beim Verbindungsaufbau angelegt
Schritt 2-4: identisch zu den Schritten 2-4 wie im Beispiel nach Figur 3.
Schritt 5: Dem gewählten Dienst (1234) werden aus der globalen Datenbank 15a bzw. 15b individuelle Ticket Informationen TP abc bzw. TP xyz übergeben.
Schritt 6: Der Dienstesteuerungspunkt 11 legt ein zweites Ticket 21a bzw. 21b (IN Ticket) an. In diesem Ticket 21a, 21b steht die echte Zielrufnummer 0987654321. Zusätzlich können noch individuelle Informationen in den sog. Transparent Data (TP) mitgegeben und im Abrechnungssystem für die Preisfindung herangezogen werden. Ob ein oder zwei Tickets zur Abrechnung kommen, entscheidet der Netzprovider.

Die oben dargestellten Beispiele zeigen lediglich ein Spektrum der Möglichkeiten. Prinzipielle ist es möglich, weitere netzinternen Informationen in den globalen Daten (z.B. White- und Blacklists, spezielle Rechte, usw.) abzulegen und sie den Netzen jeweils individuell zur Verfügung zu stellen.

### Zeichnungslegende

- 1-7: Verfahrensschritte

- 10: Telekommunikationsnetz
- 11: Dienstesteuerungspunkt (SCP)
- 12: Vermittlungsstelle
- 13: Diensteschlüssel (SK)
- 14: Flexible Dienstlogik (FSL)
- 15: Datenbank (netzspezifische globale Daten)
- 16: Datenbank (allen Netzen gemeinsam)
- 17: Endgerät
- 19: Endgerät
- 20: Billing Ticket (standard)
- 21: Billing Ticket (IN)

## Patentansprüche

1. Verfahren zur Nutzung eines gemeinsamen Dienstes aus unterschiedlichen Telekommunikationsnetzen, wobei die beteiligten Telekommunikationsnetze Intelligente Netztechnologie unterstützen, **dadurch gekennzeichnet, daß** der selbe Dienst (14a, 14b, 14c) mehrfach parallel in Form einer für jedes beteiligte Telekommunikationsnetz individuellen Dienstlogik auf einem Dienstknoten (11) installiert ist, wobei dieser Dienst (14a, 14b, 14c) von Teilnehmern der Telekommunikationsnetze mit netzindividuellen Zugangsrufnummern ansteuerbar ist, und der Dienst (14a, 14b, 14c) von Vermittlungsstellen (12a, 12b, 12c) der beteiligten Telekommunikationsnetze über einen individuellen Diensteschlüssel SK (13a, 13b, 13c) im Dienstknoten (11) aufgerufen wird, wobei alle netzindividuellen Dienstlogiken auf eine gemeinsame Teilnehmerdatenbank (16) zugreifen.

2. Verfahren nach Anspruch 1, **dadurch gekennzeichnet, daß** jede Dienstlogik der beteiligten Telekommunikationsnetze auf netzindividuelle globale Daten (15a, 15b, 15c) zugreift.

3. Verfahren nach einem der Ansprüche 1 oder 2, **dadurch gekennzeichnet, daß** der Dienst (14a, 14b, 14c) in einem Dienstesteuerungspunkt, Service Control Point, (11) eines der beteiligten Telekommunikationsnetze eingerichtet ist und von den Vermittlungsstellen (12a, 12b, 12c) über den Diensteschlüssel SK (13a, 13b, 13c) aufgerufen wird.

4. Verfahren nach einem der Ansprüche 1 bis 3, **dadurch gekennzeichnet, daß** der einem Dienst (14a, 14b, 14c) zugeordnete individuelle Diensteschlüssel (13a, 13b, 13c) von jedem beteiligten Telekommunikationsnetz eigenständig in den Vermittlungsstellen (12a, 12b, 12c) festgelegt wird.

5. Verfahren nach einem der Ansprüche 1 bis 4, **dadurch gekennzeichnet, daß** eine dienstabhängige Routinginformation immer in das Ursprungsnetz zurückgegeben wird.

6. Verfahren nach einem der Ansprüche 1 bis 8, **dadurch gekennzeichnet, daß** einem Dienst (14a, 14b, 14c) zugeordnete Billing-Tickets (20, 21) in den verkehrerzeugenden Telekommunikationsnetzen entstehen und hier abgerechnet werden.

7. Verfahren nach einem der Ansprüche 1 bis 9, **dadurch gekennzeichnet, daß** durch die netzspezifische Trennung pro Netz eine individuelle Ansagenkennung mitgegeben wird, und je Netzbetreiber eigene Ansagen ins Netz eingebracht werden.

8. Vorrichtung zur Nutzung eines gemeinsamen Dienstes aus unterschiedlichen Telekommunikationsnetzen, wobei die beteiligten Telekommunikationsnetze Intelligente Netztechnologie unterstützen, **gekennzeichnet durch** mehrere für den selben Dienst (14a, 14b, 14c) auf einem Dienstknoten (11) installierte, jeweils einem beteiligten Telekommunikationsnetz zugeordnete Dienstlogiken,
Mittel zur Ansteuerung des Dienstes (14a, 14b, 14c) **durch** mehrere anwählbare netzindividuelle Zugangsrufnummern,
Mittel zum Aufruf des Dienstes (14a, 14b, 14c) im Dienstknoten (11), **durch** mehrere individuelle Diensteschlüssel SK (13a, 13b, 13c), und
eine allen Dienstlogiken zum Zugreifen zugängliche, gemeinsame Teilnehmerdatenbank (16) .

## Claims

1. Method for using a common service from different telecommunications networks, wherein the participating telecommunications networks support intelligent network technology, **characterised in that** the same service (14a, 14b, 14c) is installed multiply in parallel on a service node (11) in the form of a service logic individual to each participating telecommunications network, wherein this service (14a, 14b, 14c) is addressable by subscribers of the telecommunications networks by means of access call numbers individual to the networks and the service (14a, 14b, 14c) is called up in the service node (11) by switching centres (12a, 12b, 12c) of the participating telecommunications networks via an individual service key SK (13a, 13b, 13c), wherein all service logics individual to the networks access a common subscriber database (16).

2. Method according to claim 1, **characterised in that** each service logic of the participating telecommunications networks accesses global data (15a, 15b, 15c) individual to the networks.

3. Method according to one of claims 1 or 2, **characterised in that** the service (14a, 14b, 14c) is set up in a service control point (11) of one of the participating networks and called up by the switching centres (12a, 12b, 12c) via the service key SK (13a, 13b, 13c).

4. Method according to any of claims 1 to 3, **characterised in that** the individual service key (13a, 13b, 13c) allocated to a service (14a, 14b, 14c) is laid down in the switching centres (12a, 12b, 12c) by each participating telecommunications network independently.

5. Method according to any of claims 1 to 4, **characterised in that** a service-dependent item of routing information is always returned into the originating network.

6. Method according to any of claims 1 to 8 [sic], **characterised in that** billing tickets (20, 21) allocated to a service (14a, 14b, 14c) are produced in the traffic-generating telecommunications networks and the accounts are settled there.

7. Method according to any of claims 1 to 9 [sic], **characterised in that** by means of network-specific division per network an individual announcement identification is imparted and each network operator's own announcements are introduced into the network.

8. Device for using a common service from different telecommunications networks, wherein the participating telecommunications networks support intelligent network technology, **characterised by**
a plurality of service logics for the same service (14a, 14b, 14c) installed on a service node (11) and each allocated to a participating telecommunications network, means for addressing the service (14a, 14b, 14c) by means of a plurality of callable access call numbers individual to the networks,
means for calling up the service (14a, 14b, 14c) in the service node (11) by means of a plurality of individual service keys SK (13a, 13b, 13c), and
a subscriber database (16) accessible for access and common to all service logics.

## Revendications

1. Procédé pour l'utilisation d'un service commun dans des réseaux de télécommunication différents, les réseaux de télécommunication impliqués utilisant une technologie de réseau intelligente, **caractérisé en ce que** le même service (14a, 14b, 14c) est installé plusieurs fois parallèlement sur un noeud de service (11), sous la forme d'un système logique de service individuel pour chaque réseau de télécommunication impliqué, ce service (14a, 14b, 14c) pouvant être commandé par les abonnes des réseaux de télécommunication avec des numéros d'appel d'accès individuels des réseaux, et le service (14a, 14b, 14c) étant appelé par des centres de commutation (12a, 12b, 12c) des réseaux de télécommunication impliqués, par l'intermédiaire d'une clé de service individuelle SK (13a, 13b, 13c) dans le noeud de service (11), tous les systèmes logiques individuels des réseaux ayant accès à une banque de données d'abonnés commune (16) .

2. Procédé selon la revendication 1, **caractérisé en ce que** chaque système logique de service des réseaux de télécommunication impliqués a accès à des données globales (15a, 15b, 15c) individuelles des réseaux.

3. Procédé selon la revendication 1 ou 2, **caractérisé en ce que** le service (14a, 14b, 14c) est installé dans un point de commande de service, Service Control Point (11) de l'un des réseaux de télécommunication impliqués et est appelé par les centres de commutation (12a, 12b, 12c) par l'intermédiaire de la clé de service SK (13a, 13b, 13c).

4. Procédé selon l'une des revendications 1 à 3, **caractérisé en ce que** la clé de service individuelle (13a, 13b, 13c) affectée à un service (14a, 14b, 14c) est fixée par chaque réseau de télécommunication impliqué, de manière autonome, dans les centres de commutation (12a, 12b, 12c).

5. Procédé selon l'une des revendications 1 à 4, **caractérisé en ce qu'**une information d'acheminement dépendante du service est toujours renvoyée au réseau initial.

6. Procédé selon l'une des revendications 1 à 8, **caractérisé en ce que** des tickets de facturation (20, 21) affectés à un service (14a, 14b, 14c) sont produits dans les réseaux de télécommunication générateurs de trafic et sont comptabilisés dans ceux-ci.

7. Procédé selon l'une des revendications 1 à 9, **caractérisé en ce que** grâce à la séparation spécifique pour chaque réseau, une identification de message individuelle est produite, et pour chaque exploitant de réseau des messages propres sont entrés dans le réseau.

8. Dispositif pour l'utilisation d'un service commun dans des réseaux de télécommunication différents, les réseaux de télécommunication impliqués utilisant une technologie de réseau intelligente,
**caractérisé par** plusieurs systèmes logiques de service qui sont installés pour le même service (14a, 14b, 14c) sur un noeud de service (11) et qui sont affectés chacun à un réseau de télécommunication impliqué,
par des moyens pour commander le service (14a, 14b, 14c) grâce à plusieurs numéros d'appel d'accès qui sont individuels pour chaque réseau et qui sont aptes à être composés,
par des moyens pour appeler le service (14a, 14b, 14c) dans le noeud de service (11) grâce à plusieurs clés de service individuelles SK (13a, 13b, 13c),
et par une banque de données d'abonnés (16) commune à laquelle tous les systèmes logiques de service peuvent accéder.
